# EUROPÄISCHE PATENTSCHRIFT

(11) **EP 3 123 575 B1**
(45) Veröffentlichungstag und Bekanntmachung des Hinweises auf die Patenterteilung: **22.08.2018**
(21) Anmeldenummer: 15831049.0
(22) Anmeldetag: 30.11.2015
(51) Int. Cl.: H01T 13/32, H01T 13/54, H01T 13/39, H01T 13/46

(54) **VORKAMMERZÜNDKERZE ZUR ZÜNDUNG EINES KRAFTSTOFF-LUFT-GEMISCHES IN EINEM VERBRENNUNGSMOTOR**
PRECHAMER SPARK PLUG FOR IGNITING A FUEL-AIR MIXTURE IN AN INTERNAL COMBUSTION ENGINE
BOUGIE D'ALLUMAGE DE PRÉCHAMBRE POUR ALLUMER UN MÉLANGE AIR-CARBURANT DANS UN MOTEUR À COMBUSTION INTERNE

(30) Priorität: 17.03.2015 DE 102015204814
(43) Veröffentlichungstag der Anmeldung: 01.02.2017
(73) Patentinhaber: DKT Verwaltungs-GmbH, 74889 Sinsheim (DE)
(72) Erfinder: KUHNERT, Steffen, 69126 Heidelberg (DE)
(74) Vertreter: Patent- und Rechtsanwälte Ullrich & Naumann
(86) Internationale Anmeldenummer: PCT/DE2015/200522
(87) Internationale Veröffentlichungsnummer: WO 2016/146092

(56) Entgegenhaltungen:
- EP-A1- 0 675 272
- DE-A1-102012 202 335
- US-A1- 2011 062 850

## Beschreibung

Die Erfindung betrifft eine Vorkammerzündkerze zur Zündung eines Kraftstoff-Luft-Gemisches in einem Verbrennungsmotor, insbesondere einem Gasmotor. Vorkammerzündkerzen der in Rede stehenden Art sind seit Jahren aus der Praxis bekannt. Bei Vorkammerzündkerzen handelt es sich um spezielle Zündkerzen für Verbrennungsmotoren, die nach dem Prinzip der Magerverbrennung arbeiten. Vorkammerzündkerzen weisen eine Vorkammer auf, die durch Übertrittsöffnungen mit dem Brennraum eines Verbrennungsmotors zusammenwirkt. Das Kraftstoff-Luft-Gemisch wird mittels Zündfunken in der Vorderkammer gezündet, wonach sich die Verbrennung in Form von Zündfackeln durch die Übertrittsöffnungen in den Brennraum des Verbrennungsmotors fortsetzt und dort das tendenziell zündunwillige magere Gemisch entzündet.

Aus der WO 2007/092972 A1 ist eine Vorkammerzündkerze bekannt. Diese weist eine mit einer Vorkammerwandung und einer Deckelfläche versehene Vorkammer auf. Die Vorkammerwandung umfasst einen zylinderförmigen Teil mit rechteckförmigen Masseelektrodenträgern, auf welchen die Masseelektroden befestigt sind. Die Masseelektrodenträger sind dabei als integraler Bestandteil des zylinderförmigen Teils ausgebildet oder an diesem festgeschweißt. Den Masseelektroden sind rechteckförmige Mittelelektroden zugeordnet, die an einem zentralen Mittelektrodenträger befestigt sind. Dadurch sind mehrere Zündflächenpaare geschaffen, über die eine bezüglich der Vorderkammer möglichst zentrale Zündung erfolgen soll.

Sowohl US 2011/0062850 A1 als auch DE 10 2012 202 335 A1 zeigt die Merkmale des Obenbegriff des vorliegenden Anspruchs 1. Bei der vorbekannten Vorkammerzündkerze ist problematisch, dass diese viele Einzelteile aufweist und daher äußerst kompliziert im Aufbau und somit teuer in der Herstellung ist. Des Weiteren ist nachteilig, dass die Zündeigenschaften der vorbekannten Vorkammerzündkerze ungenügend sind, was den Wirkungsgrad beeinträchtigt.

Der vorliegenden Erfindung liegt daher die Aufgabe zugrunde, eine Vorkammerzündkerze der eingangs genannten Art derart auszugestalten und weiterzubilden, dass mit konstruktiv einfachen Mitteln die Zündeigenschaften und somit der Wirkungsgrad verbessert sind.

Erfindungsgemäß wird die voranstehende Aufgabe durch die Merkmale des Anspruchs 1 gelöst. In erfindungsgemäßer Weise weist die Masseelektrode an der inneren Mantelfläche einen sich radial nach innen erstreckenden Vorsprung als Strömungsschutz auf. In erfindungsgemäßer Weise ist erkannt worden, dass sich die zugrundeliegende Aufgabe durch eine geschickte Ausgestaltung der Masseelektrode in verblüffend einfacher Weise lösen lässt. Durch den Strömungsschutz wird die Strömungsgeschwindigkeit des Kraftstoff-Luft-Gemisches im Bereich der Funkenbildung gezielt reduziert - d.h. ein "Windschatten" erzeugt - und eine robuste Flammenkernbildung sowie eine Verringerung von Mehrfachdurchbrüchen während der Zündung gewährleistet. Dies führt zu einem minimierten Abbrand der Elektrode, wodurch sich der Verschleiß verringert und die Lebensdauer der Vorkammerzündkerze maximiert ist. Weiter ist die Masseelektrode ringförmig ausgebildet, so dass unabhängig von der Anzahl der realisierten Zündflächen lediglich ein einziges Bauteil zur Realisierung der Masseelektrode zur Verfügung gestellt werden muss. Durch die Ausbildung der Masseelektrode als ringförmiges Element ist des Weiteren der Innendurchmesser der Vorkammer im Bereich der Zündung in idealer Weise reduziert. Dies bedingt eine Erhöhung des Dralls des Kraftstoff-Luft-Gemisches und damit einhergehend auch eine Erhöhung der Strömungsgeschwindigkeit im Zündbereich. Folglich wird eine schnelle Flammenausbreitung nach Bildung des Flammenkerns realisiert, so dass die Zündeigenschaften und somit der Wirkungsgrad deutlich verbessert sind.

Zur weiteren Verbesserung der Zündeigenschaften kann die Masseelektrode aus Nickel oder aus einer Nickel-Basislegierung hergestellt oder mit Nickel oder einer Nickel-Basislegierung beschichtet sein. Insbesondere bei der Ausbildung der Masseelektrode aus Nickel oder einer Nickel-Basislegierung ist aufgrund der hohen Wärmeleitfähigkeit dieser Werkstoffe eine effektive Wärmeableitung realisiert. Somit werden weniger sog. "Hot-Spots" in der Vorkammer erzeugt und die Neigung des Motors zu klopfender Verbrennung oder Glühzündungen minimiert.

Im Hinblick auf das Vorkammergehäuse ist es denkbar, dass dieses aus Stahl gefertigt ist. Ferner kann am Außenumfang des Vorkammergehäuses ein Außengewinde zur Befestigung der Vorkammerzündkerze in einem korrespondierenden Zündkerzengewinde eines Verbrennungsmotors ausgebildet sein. In das Vorkammergehäuse kann ein Isolator, beispielsweise ein Keramikisolator, eingesetzt sein, der die Mittelelektrode von der Masseelektrode isoliert. Hinsichtlich der Kappe ist es denkbar, dass diese aus Nickel oder einer Nickel-Basislegierung hergestellt ist oder mit Nickel oder einer Nickel-Basislegierung beschichtet ist.

Um eine besonders einfache und somit kostengünstige Herstellung der Vorkammerzündkerze zu ermöglichen, kann die Masseelektrode mit dem Vorkammergehäuse form- und/oder kraftschlüssig verbunden sein. Dabei ist es denkbar, dass die Masseelektrode in das Vorkammergehäuse eingeschweißt, eingepresst, eingeschrumpft und/oder eingeschraubt ist.

Die Masseelektrode weist an der inneren Mantelfläche mindestens eine als Nocken ausgebildete Zündfläche auf. Durch diese konstruktive Maßnahme wird eine kugelförmige Flammenausbreitung ermöglicht, sobald sich ein stabiler Flammenkern gebildet hat. Dies führt zu einer schnelleren Flammenausbreitung und somit einer schnelleren Verbrennung des Kraftstoff-Luft-Gemisches, wodurch sich der Wirkungsgrad erhöht und eine Flammenauslöschung an der kalten Wand verhindert wird. Dabei ist denkbar, das beispielsweise vier Nocken, d.h. vier Zündflächen, an der Masseelektrode vorgesehen sind.

Zur Verlängerung der Lebensdauer des als Zündfläche wirkenden Nockens kann an diesem bzw. diesen eine Armierung aus Edelmetall angeordnet sein. Als Edelmetall kommen beispielsweise Platin, Iridium oder eine Platin-Basislegierung oder eine Iridium-Basislegierung in Frage. Aufgrund des höheren Schmelzpunktes dieser Werkstoffe im Vergleich zu reinem Nickel ist die Lebensdauer der Vorkammerzündkerze bei gleichzeitiger Gewährleistung idealer Zündeigenschaften maximiert.

Dabei ist es denkbar, dass die Armierung als Plättchen ausgebildet ist. Das Plättchen kann mit dem Nocken form- und/oder kraftschlüssig verbunden sein. Insbesondere kann das Plättchen an dem Nocken angeschweißt sein. Sofern mehrere Nocken ausgebildet sind, kann jeder der Nocken ein entsprechendes Plättchen als Armierung aufweisen.

Alternativ ist es denkbar, dass die Armierung als Niet ausgebildet ist, wobei der Niet in einem Durchgang der Masseelektrode form- und/oder kraftschlüssig angeordnet ist. Beispielsweise kann der Niet in den Durchgang eingepresst, eingeschrumpft und/oder über eine an der äußeren Mantelfläche der Masseelektrode angeordnete Punktschweißung fixiert sein. Auch bei dieser Ausgestaltung kann bei einer Masseelektrode mit mehreren Nocken jeder der Nocken einen Niet als Armierung aufweisen.

Zur weiteren Verbesserung der Zündeigenschaften kann der Vorsprung eine asymmetrische Geometrie aufweisen, beispielsweise in From eines Spoilers.

Des Weiteren ist es denkbar, dass die Mittelelektrode aus Platin oder Iridium hergestellt oder mit Platin oder Iridium beschichtet ist. Im Hinblick auf die konkrete Ausgestaltung der Mittelelektrode kann diese als mindestens ein Streifen, vorzugsweise als zwei kreuzförmige bzw. x-förmige Streifen, mit gekrümmten Enden ausgebildet sein, wobei die Oberfläche jedes der gekrümmten Enden jeweils eine Zündfläche bildet, die mit einer Zündfläche der Masseelektrode - dem Nocken - korrespondiert. Durch diese Konstruktion ist eine besonders einfache Herstellung der Mittelelektrode möglich, da der Streifen in einem Stanzvorgang hergestellt sein kann. Anschließend kann der Streifen verformt werden. Im Konkreten können sich die Enden von einem im Wesentlichen rund- oder kreisförmig ausgebildeten Mittelabschnitt beiderseits in radialer Richtung erstrecken. Im Endbereich können die Enden bogenförmig gekrümmt sein, um sich allmählich, quasi ähnlich einer Hyperbel, an die Nocken der Masseelektrode anzunähern.

Alternativ ist es denkbar, dass die Mittelektrode mindestens zwei Arme aufweist, insbesondere kreuzförmig mit mindestens vier Armen ausgebildet ist. Die Arme können sich dabei ausgehend von einem Mittelpunkt in radialer Richtung erstrecken. Die Enden der Arme können bogenförmig gekrümmt sein und sich an die Masseelektrode bzw. die als Zündfläche dienenden Nocken annähern.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer teilweisen Schnittdarstellung ein Ausführungsbeispiel einer erfindungsgemäßen Vorkammerzündkerze,
- Fig. 2: in einer perspektivischen Darstellung ein erstes Ausführungsbeispiel einer erfindungsgemäßen Masseelektrode,
- Fig. 3: in einer geschnittenen Draufsicht ein weiteres Ausführungsbeispiel einer erfindungsgemäßen Vorkammerzündkerze mit einer Masse-elektrode gemäß Fig. 2,
- Fig. 4: in einer perspektivischen Darstellung ein zweites Ausführungsbeispiel einer erfindungsgemäßen Masseelektrode,
- Fig. 5: in einer Draufsicht die Masseelektrode gemäß Fig. 4,
- Fig. 6: in einer geschnittenen Draufsicht ein Ausführungsbeispiel einer erfindungsgemäßen Vorkammerzündkerze mit einer Masseelektrode gemäß Fig. 4,
- Fig. 7: in einer perspektivischen Darstellung ein drittes Ausführungsbeispiel einer erfindungsgemäßen Masseelektrode,
- Fig. 8: in einer Draufsicht die Masseelektrode gemäß Fig. 7,
- Fig. 9: in verschiedenen Ansichten eine Mittelelektrode in Form eines Streifens einer erfindungsgemäßen Vorkammerzündkerze.

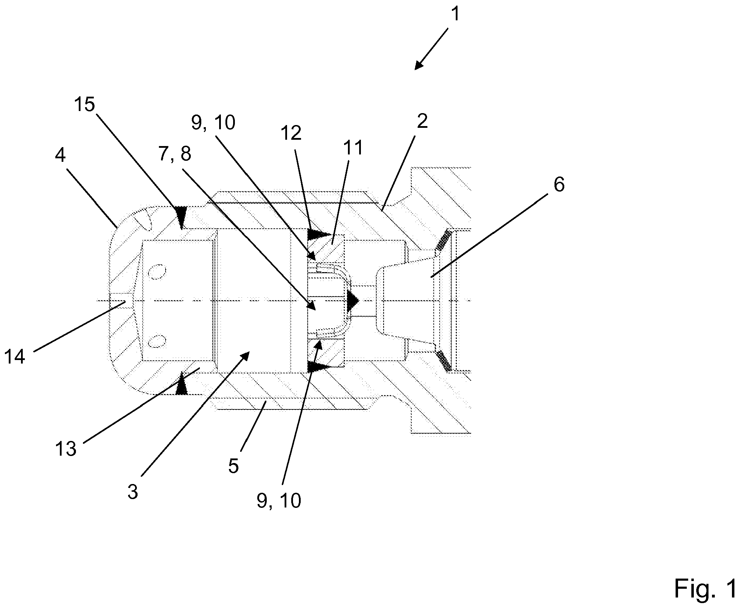

Fig. 1 zeigt in einer teilweisen Schnittdarstellung ein Ausführungsbeispiel einer erfindungsgemäßen Vorkammerzündkerze. Die Vorkammerzündkerze weist einen Zündkerzenkörper 1 auf, der ein Vorkammergehäuse 2 sowie eine die Vorkammer 3 zumindest teilweise verschließende Kappe 4 umfasst. Am äußeren Umfang des Vorkammergehäuses 2 ist ein Außengewinde 5 ausgebildet. Des Weiteren ist im Vorkammergehäuse 2 ein Isolator 6 angeordnet, der in Fig. 1 ebenfalls teilweise dargestellt ist.

Die Vorkammerzündkerze weist innerhalb der Vorkammer 3 eine Mittelelektrode 7 auf. Diese ist in Form eines Streifens 8 mit bogenförmig gekrümmten Enden 9 ausgebildet. Der Streifen 8 weist im hier dargestellten Ausführungsbeispiel zwei Enden 9 auf, die jeweils als Zündfläche 10 wirken. Der Streifen 8 ist dabei aus einer Iridiumlegierung oder Platinlegierung hergestellt.

Des Weiteren ist eine ringförmige Masseelektrode 11 an dem Vorkammergehäuse 2 über eine Schweißnaht 12 fixiert. Die Masseelektrode 11 ist aus Nickel oder einer Nickel-Basislegierung hergestellt. Die Verbindung zwischen Masseelektrode 11 und Vorkammergehäuse 2 kann mit einem üblichen Schweißverfahren, wie z.B. WIG-, Plasma- oder Laserschweißverfahren hergestellt sein. Alternativ oder zusätzlich kann die Masseelektrode 11 in das Vorkammergehäuse 2 eingeschraubt oder eingepresst sein.

Die die Vorkammer 3 zumindest teilweise verschließende Kappe 4 ist becherförmig ausgebildet und weist im Kontaktbereich mit dem Vorkammergehäuse 2 einen umlaufenden Bund 13 auf. Zur Ausbreitung der Flammenfront ist am von den Elektroden abgewandten Ende der Kappe 4 eine Öffnung 14 vorgesehen. Die Kappe 4 ist über eine weitere Schweißnaht 15 an dem Vorkammergehäuse 2 fixiert.

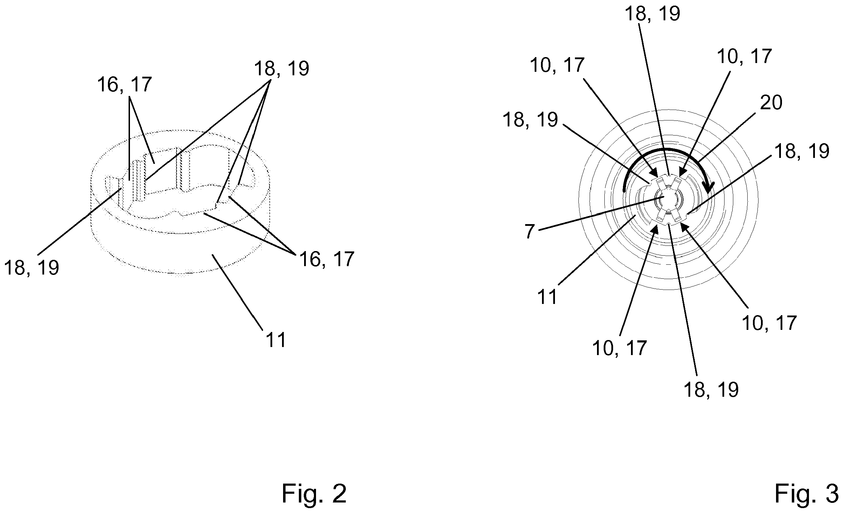

An dieser Stelle sei darauf hingewiesen, dass in den Fig. 2 bis 9 zur Verbesserung der Übersichtlichkeit zum Teil auf das Setzen von Bezugszeichen verzichtet ist.

Fig. 2 zeigt in einer perspektivischen Darstellung ein erstes Ausführungsbeispiel einer erfindungsgemäßen Masseelektrode 11. Die Masseelektrode 11 ist ringförmig ausgebildet und weist einen Außendurchmesser auf, der ca. dem Innendurchmesser des Vorkammergehäuses 2 in dem Bereich entspricht, in dem die Masseelekrode 11 angeordnet ist. Die ringförmige Ausgestaltung der Masseelektrode 11 führt zu einer gezielten Reduktion des Innendurchmessers der Vorkammer 3 im Bereich der Zündung, wodurch sich der Drall und die Strömungsgeschwindigkeit des Kraftstoff-Luft-Gemisches erhöhen. Nach der Bildung des Flammenkerns wird dadurch eine deutlich schnellere Flammenausbreitung erreicht, was eine Verbesserung des Wirkungsgrads der erfindungsgemäßen Vorkammerzündkerze bewirkt.

Die Masseelektrode 11 weist an der inneren Mantelfläche vier als Nocken 16 ausgebildete Zündflächen 17 auf. Des Weiteren sind an der inneren Mantelfläche der Masseelektrode 11 sich radial nach innen erstreckende Vorsprünge 18 als Strömungsschutz 19 angeordnet. Aus Fig. 2 geht dabei deutlich hervor, dass die Vorsprünge 18 eine asymmetrische, spoilerartige Geometrie aufweisen.

Fig. 3 zeigt in einer geschnittenen Draufsicht ein weiteres Ausführungsbeispiel einer erfindungsgemäßen Vorkammerzündkerze mit einer Masseelektrode 11 gemäß Fig. 2.

In dieser Darstellung sind die von den Zündflächen 10 der Mittelektrode 7 und den Zündflächen 17 der Masseelektrode 11 gebildeten vier Zündflächenpaare deutlich zu erkennen. Des Weiteren ist mit dem Pfeil 20 die Drallrichtung des Kraftstoff-Luft-Gemisches innerhalb der Vorkammer 3 dargestellt. Dadurch wird deutlich, dass die den Strömungsschutz 19 bildenden Vorsprünge 18 in Drallrichtung gesehen vor den Nocken 16 ausgebildet sind. Dadurch wird eine gezielte Reduktion der Strömungsgeschwindigkeit des Kraftstoff-Luft-Gemisches im Bereich der Funkenbildung, nämlich der Zündflächen 10, 17, erreicht und somit eine robuste Flammenkernbildung und eine Verringerung von Mehrfach-Durchbrüchen während der Zündung gewährleistet.

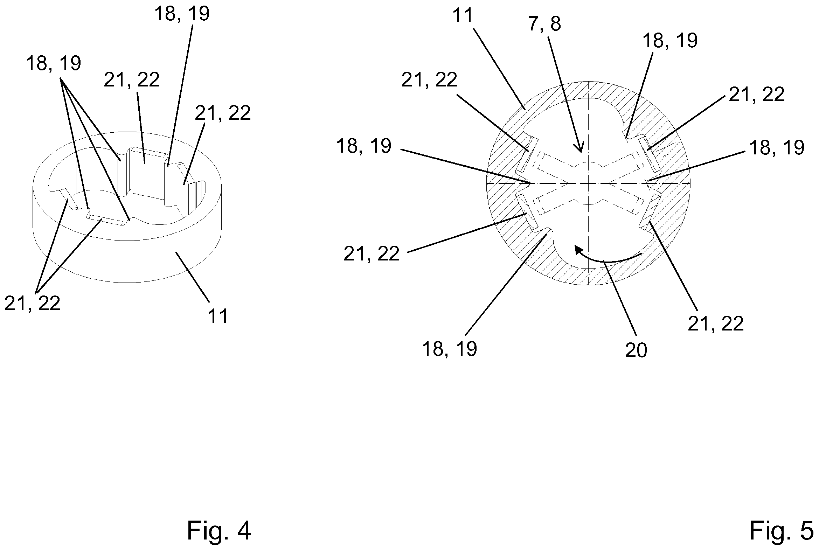

Fig. 4 zeigt in einer perspektivischen Darstellung ein zweites Ausführungsbeispiel einer erfindungsgemäßen Masseelektrode 11. Die Masseelektrode 11 entspricht der in Fig. 2 dargestellten Masseelektrode 11, wobei zusätzlich an dem Nocken 16 eine Armierung 21 aus Edelmetall, beispielsweise Platin, Iridium oder einer Platin-Basislegierung oder einer Iridium-Basislegierung vorgesehen ist. Die Armierung 21 ist als Plättchen 22 ausgebildet, das auf den Nocken 16 angeordnet ist. Im Konkreten kann das Plättchen 22 an dem Nocken 16 angeschweißt sein.

Fig. 5 zeigt in einer Draufsicht die Masseelektrode 11 gemäß Fig. 4. Dabei ist nochmals deutlich zu erkennen, dass die Nocken 16 der ringförmigen Masseelektrode 11 jeweils ein Plättchen 22 als Armierung 21 aufweisen, so dass die Plättchen 22 die Zündfläche 17 der Masseelektrode 11 bilden. Da das Edelmetall der Armierung 21 einen höheren Schmelzpunkt als das Nickel bzw. die Nickel-Basislegierung der ringförmigen Masseelektrode 11 aufweist, erhöht sich die Lebensdauer der Vorkammerzündkerze deutlich.

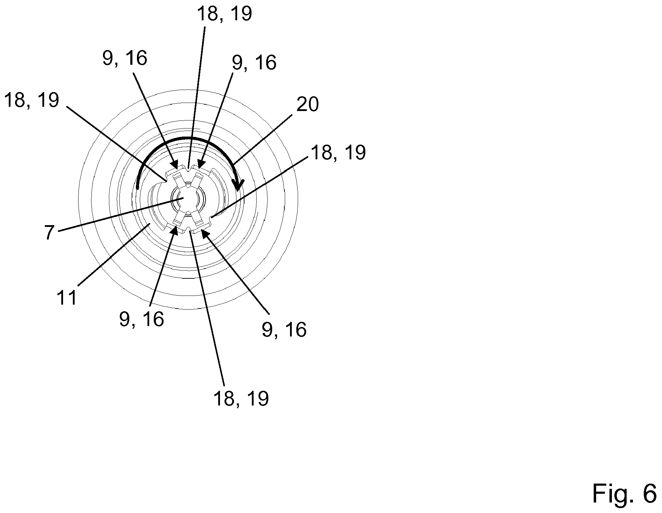

Fig. 6 zeigt in einer geschnittenen Draufsicht ein Ausführungsbeispiel einer erfindungsgemäßen Vorkammerzündkerze mit einer Masseelektrode 11 gemäß Fig. 4. Da die in den Fig. 4 bis 6 dargestellte Masseelektrode 11 der in den Fig. 2 und 3 dargestellten Masseelektrode 11 entspricht, wird zur Vermeidung von Wiederholungen auf die diesbezüglichen Ausführungen, insbesondere betreffend den Strömungsschutz 19, verwiesen.

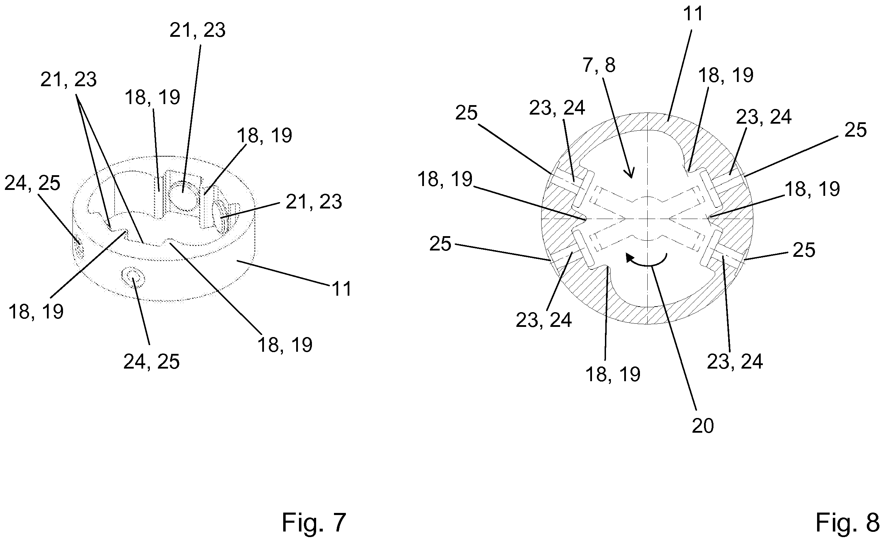

Fig. 7 zeigt in einer perspektivischen Darstellung ein drittes Ausführungsbeispiel einer erfindungsgemäßen Masseelektrode 11. Die ringförmige Masseelektrode 11 entspricht der in Fig. 2 dargestellten Masseelektrode 11, wobei die Armierung 21 in Form eines Niets 23 realisiert ist. Der Niet 23 ist in einem Durchgang 24 der Masseelektrode 11 angeordnet und über eine an der äußeren Mantelfläche der Masseelektrode 11 angeordnete Punktschweißung 25 fixiert. Diese Konstruktion zeichnet sich durch eine besonders einfache und sichere Fixierung des Niets 23 an der ringförmigen Masseelektrode 11 aus.

Fig. 8 zeigt in einer Draufsicht die Masseelektrode 11 gemäß Fig. 7. Dabei ist deutlich der Durchgang 24 zu erkennen, in dem der Niet 23 angeordnet ist. Des Weiteren ist die an der äußeren Mantelfläche der Masseelektrode 11 angeordnete Punktschweißung 25 dargestellt. Die in den Fig. 7 und 8 dargestellte Masseelektrode 11 entspricht ansonsten der in den Fig. 2 und 3 dargestellten Masseelektrode 11, so dass sich weitere Ausführungen, insbesondere in Bezug auf den Strömungsschutz 19, unter Hinweis auf die diesbezügliche Beschreibung erübrigen.

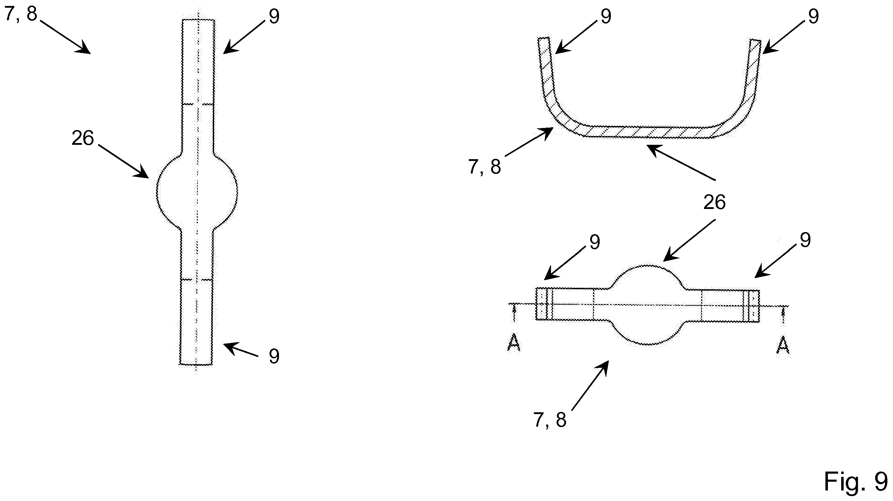

Fig. 9 zeigt in verschiedenen Ansichten eine Mittelelektrode 7 in Form eines Streifens 8 einer erfindungsgemäßen Vorkammerzündkerze. Die linke Darstellung in Fig. 9 zeigt den Streifen 8, wie er beispielsweise auf einfache Weise bei einem Stanzvorgang hergestellt werden kann. Der Streifen 8 weist einen runden oder kreisförmigen Mittelabschnitt 26 auf, von dem aus sich die beiden Enden 9 in radialer Richtung erstrecken. Die beiden rechten Darstellungen in Fig. 9 zeigen den Streifen 8 in bereits verformtem Zustand, wie er an den aus dem Isolator 6 herausragenden Abschnitt der Mittelelektrode 7 angeschweißt wird. Die bogenförmigen Enden 9 schließen mit dem Mittelabschnitt 26 des Streifens 8 im einbaufertig verformten Zustand einen Winkel ein, der größer als 90° ist. Als besonders vorteilhaft hat sich in diesem Zusammenhang ein Winkel von 96° +/- 1° herausgestellt, wodurch bei einer erfindungsgemäßen ringförmigen Ausgestaltung der Masseelektrode 11 die gesamte Vorkammerzündkerze äußerst einfach aufgebaut ist und ideale Zündeigenschaften aufweist.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Zündkerzenkörper
- 2: Vorkammergehäuse
- 3: Vorkammer
- 4: Kappe
- 5: Außengewinde
- 6: Isolator
- 7: Mittelelektrode
- 8: Streifen
- 9: Ende
- 10: Zündfläche (Mitteelektrode)
- 11: Masseelektrode
- 12: Schweißnaht
- 13: Bund
- 14: Öffnung
- 15: Schweißnaht
- 16: Nocken
- 17: Zündfläche (Masseelektrode)
- 18: Vorsprung
- 19: Strömungsschutz
- 20: Drallrichtung
- 21: Armierung
- 22: Plättchen
- 23: Niet
- 24: Durchgang
- 25: Punktschweißung
- 26: Mittelabschnitt

## Patentansprüche

1. Vorkammerzündkerze zur Zündung eines Kraftstoff-Luft-Gemisches in einem Verbrennungsmotor, insbesondere einem Gasmotor, umfassend einen Zündkerzenkörper (1), der ein Vorkammergehäuse (2) und eine die Vorkammer (3) zumindest teilweise verschließende Kappe (4) aufweist, eine in dem Zündkerzenkörper (1) angeordnete Masseelektrode (11) und eine in die Vorkammer (3) hineinragende Mittelelektrode (7), wobei die Masseelektrode (11) ringförmig ausgebildet ist und an der inneren Mantelfläche mindestens eine als Nocken (16) ausgebildete Zündfläche (17) aufweist,
**dadurch gekennzeichnet, dass** die Masseelektrode (11) an der inneren Mantelfläche einen sich radial nach innen erstreckenden Vorsprung (18) als Strömungsschutz (19) aufweist.

2. Vorkammerzündkerze nach Anspruch 1, **dadurch gekennzeichnet, dass** die Masseelektrode (11) aus Nickel oder aus einer Nickel-Basislegierung hergestellt ist oder mit Nickel oder einer Nickel-Basislegierung beschichtet ist.

3. Vorkammerzündkerze nach Anspruch 1 oder 2, **dadurch gekennzeichnet, dass** die Masseelektrode (11) mit dem Vorkammergehäuse (2) form- und/oder kraftschlüssig verbunden ist, insbesondere in das Vorkammergehäuse (2) eingeschweißt, eingepresst, eingeschrumpft und/oder eingeschraubt ist.

4. Vorkammerzündkerze nach einem der Ansprüche 1 bis 3, **dadurch gekennzeichnet, dass** an dem Nocken (16) eine Armierung (21) aus Edelmetall, insbesondere aus Platin, Iridium oder einer Platin-Basislegierung oder einer Iridium-Basislegierung, angeordnet ist.

5. Vorkammerzündkerze nach Anspruch 4, **dadurch gekennzeichnet, dass** die Armierung (21) als Plättchen (22) ausgebildet ist, wobei das Plättchen (22) mit dem Nocken (16) form-und/oder kraftschlüssig verbunden ist, insbesondere angeschweißt ist.

6. Vorkammerzündkerze nach Anspruch 4, **dadurch gekennzeichnet, dass** die Armierung (21) als Niet (23) ausgebildet ist, wobei der Niet (23) in einem Durchgang (24) der Masseelektrode (11) form- und/oder kraftschlüssig angeordnet ist, insbesondere in den Durchgang (24) eingepresst, eingeschrumpft und/oder über eine an der äußeren Mantelfläche der Masseelektrode (11) angeordnete Punktschweißung (25) fixiert ist.

7. Vorkammerzündkerze nach einem der Ansprüche 1 bis 6, **dadurch gekennzeichnet, dass** der Vorsprung (19) eine asymmetrische, insbesondere spoilerartige Geometrie aufweist.

8. Vorkammerzündkerze nach einem der Ansprüche 1 bis 7, **dadurch gekennzeichnet, dass** die Mittelelektrode (7) aus Platin oder Iridium hergestellt oder mit Platin oder Iridium beschichtet ist.

9. Vorkammerzündkerze nach einem der Ansprüche 1 bis 8, **dadurch gekennzeichnet, dass** die Mittelelektrode (7) als mindestens ein Streifen (8), vorzugsweise als zwei kreuzförmige bzw. x-förmige Streifen (8), mit gekrümmten Enden (9) ausgebildet ist, wobei die Oberfläche jedes der gekrümmten Enden (9) jeweils eine Zündfläche (10) bildet.

## Claims

1. Prechamber spark plug for igniting a fuel/air admixture in an internal combustion engine, in particular a gas engine, comprising a spark plug member (1) which has a prechamber housing (2) and a cap (4) which at least partially closes the prechamber (3), an earth electrode (11) which is arranged in the spark plug member (1) and a centre electrode (7) which protrudes into the prechamber (3), wherein the prechamber (11) is constructed in an annular manner and has on the inner covering face thereof at least one ignition face (17) which is constructed as a cam (16),
**characterised in that** the earth electrode (11) has on the inner covering face a projection (18) which extends radially inwards as a flow protection (19).

2. Prechamber spark plug according to claim 1, **characterised in that** the earth electrode (11) is produced from nickel or a nickel-based alloy or is coated with nickel or a nickel-based alloy.

3. Prechamber spark plug according to claim 1 or 2, **characterised in that** the earth electrode (11) is connected to the prechamber housing (2) in a positive-locking and/or non-positive-locking manner, in particular welded, pressed, shrunk and/or screwed into the prechamber housing (2).

4. Prechamber spark plug according to any one of claims 1 to 3, **characterised in that** a reinforcement (21) of precious metal, in particular of platinum, iridium or a platinum-based alloy or an iridium-based alloy is arranged on the cam (16).

5. Prechamber spark plug according to claim 4, **characterised in that** the reinforcement (21) is constructed as a plate (22), wherein the plate (22) is connected to the cam (16) in a positive-locking and/or non-positive-locking manner, in particular welded.

6. Prechamber spark plug according to claim 4, **characterised in that** the reinforcement (21) is constructed as a rivet (23), wherein the rivet (23) is arranged in a passage (24) of the earth electrode (11) in a positive-locking and/or non-positive-locking manner, in particular pressed, shrunk into the passage (24), and/or fixed via a spot weld (25) which is arranged on the outer covering face of the earth electrode (11) .

7. Prechamber spark plug according to any one of claims 1 to 6, **characterised in that** the projection (19) has an asymmetrical, in particular spoiler-like, geometry.

8. Prechamber spark plug according to any one of claims 1 to 7, **characterised in that** the centre electrode (7) is produced from platinum or iridium or is coated with platinum or iridium.

9. Prechamber spark plug according to any one of claims 1 to 8, **characterised in that** the centre electrode (7) is constructed as at least one strip (8), preferably as two cross-like or X-shaped strips (8), with curved ends (9), wherein the surface of each of the curved ends (9) forms an ignition face (10).

## Revendications

1. Bougie d'allumage de préchambre destinée à l'allumage d'un mélange carburant-air dans un moteur à combustion, en particulier un moteur à gaz, comprenant un corps de bougie d'allumage (1) qui présente un boîtier de préchambre (2) et un capuchon (4) fermant au moins partiellement la préchambre (3), une électrode de masse (11) disposée dans le corps de bougie d'allumage (1) et une électrode centrale (7) faisant saillie dans la préchambre (3), l'électrode de masse (11) étant constituée en forme d'anneau et présentant, sur la surface d'enveloppe intérieure, au moins une surface d'allumage (17) constituée en tant que came (16),
**caractérisée en ce que**, sur la surface d'enveloppe intérieure, l'électrode de masse (11) présente, en tant que protection d'écoulement (19), une saillie (18) s'étendant radialement vers l'intérieur.

2. Bougie d'allumage de préchambre selon la revendication 1, **caractérisée en ce que** l'électrode de masse (11) est fabriquée en nickel ou en alliage à base de nickel ou est revêtue de nickel ou d'alliage à base de nickel.

3. Bougie d'allumage de préchambre selon la revendication 1 ou 2, **caractérisée en ce que** l'électrode de masse (11) est raccordée au boîtier de préchambre (2) par liaison de forme et/ou de force, en particulier est soudée, pressée, frettée et/ou vissée dans le boîtier de préchambre (2).

4. Bougie d'allumage de préchambre selon l'une des revendications 1 à 3, **caractérisée en ce qu'**une armature (21) en métal précieux, en particulier en platine, iridium ou en alliage à base de platine ou en alliage à base d'iridium, est disposée sur la came (16).

5. Bougie d'allumage de préchambre selon la revendication 4, **caractérisée en ce que** l'armature (21) est constituée en tant que plaquette (22), la plaquette (22) étant raccordée à la came (16) par liaison de forme et/ou de force, en particulier soudée.

6. Bougie d'allumage de préchambre selon la revendication 4, **caractérisée en ce que** l'armature (21) est constituée en tant que rivet (23), le rivet (23) étant disposé par liaison de forme et/ou de force dans un passage (24) de l'électrode de masse (11), en particulier est pressé, fretté et/ou fixé par le biais d'un soudage par points (25) disposé sur la surface d'enveloppe extérieure de l'électrode de masse (11) dans le passage (24).

7. Bougie d'allumage de préchambre selon l'une des revendications 1 à 6, **caractérisée en ce que** la saillie (19) présente une géométrie asymétrique, en particulier du type aileron.

8. Bougie d'allumage de préchambre selon l'une des revendications 1 à 7, **caractérisée en ce que** l'électrode centrale (7) est fabriquée en platine ou iridium ou revêtue de platine ou d'iridium.

9. Bougie d'allumage de préchambre selon l'une des revendications 1 à 8, **caractérisée en ce que** l'électrode centrale (7) est constituée en tant qu'au moins une bande (8), de préférence en tant que deux bandes (8) en forme de croix ou respectivement de x, avec des extrémités (9) courbées, la surface de chacune des extrémités (9) courbées formant une surface d'allumage (10).
